(19) Europäisches Patentamt / European Patent Office / Office européen des brevets

(11) **EP 2 483 999 B1**

(12) **EUROPÄISCHE PATENTSCHRIFT**

(45) Veröffentlichungstag und Bekanntmachung des Hinweises auf die Patenterteilung:
**09.04.2014   Patentblatt 2014/15**

(21) Anmeldenummer: **10763671.4**

(22) Anmeldetag: **30.09.2010**

(51) Int Cl.:
**H02M 1/42** (2007.01)          **H05B 33/08** (2006.01)
**H02M 3/156** (2006.01)

(86) Internationale Anmeldenummer:
**PCT/EP2010/064570**

(87) Internationale Veröffentlichungsnummer:
**WO 2011/039313 (07.04.2011 Gazette 2011/14)**

(54) **VERFAHREN UND SCHALTUNG ZUR EIN-PIN LEISTUNGSFAKTOR-KORREKTUR**

METHOD AND CIRCUIT FOR ONE-PIN POWER FACTOR CORRECTION

PROCÉDÉ ET CIRCUIT DE UN-PIN CORRECTION DU FACTEUR DE PUISSANCE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **01.10.2009   DE 102009047984**

(43) Veröffentlichungstag der Anmeldung:
**08.08.2012   Patentblatt 2012/32**

(73) Patentinhaber: **Tridonic GmbH & Co KG**
**6850 Dornbirn (AT)**

(72) Erfinder: **MARENT, Günter**
**A-6780 Bartholomäberg (AT)**

(74) Vertreter: **Rupp, Christian et al**
**Mitscherlich PartmbB**
**Patent- und Rechtsanwälte**
**Sonnenstraße 33**
**80331 München (DE)**

(56) Entgegenhaltungen:
**US-A- 5 107 184          US-A- 5 177 408**
**US-A1- 2005 146 908**

**Beschreibung**

Die vorliegende Erfindung bezieht sich auf ein Verfahren sowie eine Vorrichtung zur aktiven Leistungsfaktor-Korrektur (Power Factor Correction), d.h. mittels eines aktiv von einer Steuereinheit getakteten Schalters, sowie deren Verwendung in Betriebsgeräten für Leuchtmitteln.

Das technische Gebiet der vorliegenden Erfindung ist insbesondere das der Leistungsfaktor-Korrektur bei Wechselspannungs-/Gleichspannungs-Leistungswandler, insbesondere in Betriebsgeräten für Leuchtmitteln, wie bspw. Gasentladungslampen, LEDS oder OLEDs.

Die hier betrachteten Wandler haben in erster Linie die Aufgabe eine gleichgerichtete Netzspannung, die nach einer üblichen Brückengleichrichtung aus aufeinander folgenden Sinushalbwellen gleicher Polarität besteht und die Eingangsspannung für den Wandler bildet, in eine Gleichspannung umzuwandeln, die unabhängig von Schwankungen der Eingangsspannung und der Last am Ausgang weitgehend konstant bleibt.

Darüber hinaus soll die Leistungsfaktor-Korrektur dafür sorgen, dass der durch den Wandler vom Netz entnommene zerhackte Strom einer Hüllkurve folgt, die einen möglichst sinusförmigen Zeitverlauf hat, der weitgehend dem sinusförmigen Zeitverlauf der Netzspannung entspricht. Auf diese Weise können durch den Zerhackungsprozess zwangsläufig entstehende Oberwellen, die in unerwünschter Weise in das Netz zurückgestrahlt werden in starkem Maße vermindert werden.

Nach der WO 2007/121944 ist eine Wandler-Schaltung zur Leistungsfaktor-Korrektur bekannt, bei der bei der eine vorzugsweise aus gleichgerichteten Netzhalbwellen bestehende Eingangsspannung einer Induktivität zugeführt wird. Die Induktivität wird wiederholt mittels eines getakteten Schalters durch Schließen und Öffnen desselben ge- und entladen, wobei der Ladestrom über den Schalter fließt. Der Entladestrom der Induktivität wird über eine Diode dem Ausgang des Wandlers zugeführt. Eine Steuereinheit erzeugt Schaltsignale für den Schalter und gibt diese über einen Steuer-PIN an den Schalter aus. Zum Erzeugen der Schaltsignale wertet die Steuereinheit mindestens vier Sensor-Signale aus, wobei die Steuereinheit für jedes Sensor-Signal einen separaten Sensor-PIN aufweist. Die vier Sensor-Signale entsprechen im Einzelnen der Eingangsspannung, dem Entladestrom der Induktivität, dem Ladestrom der Induktivität und der Zwischenkreisspannung. Die Induktivität bildet die Primärwicklung eines Übertragers, dessen Sekundärwicklung einerseits an Masse liegt und andererseits über einen Widerstand mit dem Sensor-PIN der Steuereinheit für den Ladestrom verbunden ist. Der Ladestrom wird über den Spannungsabfall an einem mit dem Schalter in Serie geschalteten Shunt (niederohmigen Messwiderstand) ermittelt. Dieser Spannungsabfall ist damit gleichzeitig ein Maß für den über den geschlossenen Schalter fließenden Strom, der zur Vermeidung eines Überstroms überwacht werden muss. Die über dem Shunt abfallende Spannung wird außerdem in der Steuereinheit mit einem Referenzwert verglichen, bei dessen Erreichen der Schalter geöffnet wird. Die Entladespannung wird auf den Zeitpunkt des Nulldurchganges hin überwacht. Wenn dieser detektiert wird, wird der Schalter wieder geschlossen. Die relativ große Anzahl von Sensor-Pins (Eingangs-Pins einer Integrierten Schaltung wie bspw. ASIC oder μC) schlägt sich im Preis und dem Platzbedarf der Schaltung nieder und ist dementsprechend nachteilig.

Aus der DE 101 28 588 A1 ist eine Wandler-Schaltung bekannt, bei der die Zahl der Sensor-Pins auf zwei reduziert ist. Die diesen beiden Sensor-Pins zugeführten Sensor-Signale entsprechen in einzelnen der Eingangsspannung und der Ausgangsspannung. Eine Auswertung der Eingangsspannung ist normalerweise für die Regelung der Ausgangsspannung nicht nötig. In diesem Fall wird die Eingangsspannung aber benötigt, um die Einschaltzeit des Schalters beim Nulldurchgang zu verlängern. Durch diese Maßnahme kann das ansonsten sprunghafte Abfallen des Entladestromes der Induktivität vermieden werden. Dieses sprunghafte Abfallen führt ohne die genannte Maßnahme zur Bildung von Oberwellen und damit zu Störfrequenzen.

Aus der DE 10 2004 025 597 A1 ist eine Wandler-Schaltung bekannt, welche die nur einen einzigen Sensor-PIN aufweist. Dieser ist mit dem Verbindungspunkt von zwei einen Spannungsteiler bildenden Widerständen verbunden, wobei der Spannungsteiler einerseits mit dem Verbindungspunkt zwischen der Induktivität und der Diode und andererseits mit Masse verbunden ist. Dem Sensor-PIN wird bei geöffnetem Schalter die Zwischenkreisspannung zugeführt, die - ausgenommen in der Entladungs-Endphase - der Ausgangsspannung entspricht und in der Entladungs-Endphase den Nulldurchgang durch Abknicken anzeigt. Die Steuereinheit berechnet aus den Sensor-Informationen die Ein- und Ausschaltzeit für den Schalter. Am Ende der Einschaltzeit fließt ein bekannter maximaler Ladestrom. Aus der bekannten Induktivität, dem bekannten maximalen Ladestrom, und den bekannten Ein- und Ausschaltzeiten für den Schalter berechnet die Steuereinheit dann die Eingangsspannung und die Ausgangsspannung.

Der Erfindung liegt deshalb die Aufgabe zugrunde, ein alternatives Verfahren und eine alternative Wandler-Schaltung mit Leistungsfaktor-Korrektur anzugeben, die die vorstehend genannten Nachteile vermeidet, die ebenfalls mit nur einem Sensor-PIN auskommt.

Die Aufgabe ist durch die Merkmale der unabhängigen Ansprüche gelöst. Die abhängigen Ansprüche bilden den Gegenstand der Erfindung in besonders vorteilhafter Weise weiter.

Was das erfindungsgemäße Verfahren betrifft, so wird von einem Stand der Technik ausgegangen, bei dem eine vorzugsweise aus gleichgerichteten Netzhalbwellen bestehende Eingangsspannung einer Induktivität zugeführt wird,

bei dem die Induktivität wiederholt mittels eines durch eine Steuereinheit getakteten Schalters durch Schließen und Öffnen desselben ge- und entladen wird und der Ladestrom über den Schalter fließt,

bei dem der Entladestrom der Induktivität über eine Diode dem Ausgang des Wandlers zugeführt wird,

bei dem der Steuereinheit eine Sensorspannung zugeführt wird, und

bei dem die Steuereinheit unter Auswertung der Sensorspannung ein Schaltsignal erzeugt, mit dem der Schalter getaktet wird.

Dabei besteht die Sensorspannung bei geöffnetem Schalter aus mindestens zwei Spannungskomponenten besteht, von denen die erste

    a) der Ausgangsspannung

    oder

    b) der Eingangsspannung

entspricht, und von denen die zweite einer aus der Eingangsspannung und Ausgangsspannung gebildeten Differenzspannung entspricht, und

bei dem die beiden Spannungskomponenten bei geöffnetem Schalter derart überlagert werden, dass die eine der beiden die Differenzspannung bildenden Spannungen kompensiert wird, so dass nur noch die andere zur Bildung der Sensorspannung zur Verfügung steht und durch die Steuereinheit als Betriebsparameter ausgewertet wird.

Was die erfindungsgemäße Schaltung betrifft, so wird von einem Stand der Technik ausgegangen,

bei dem eine vorzugsweise aus gleichgerichteten Netzhalbwellen bestehende Eingangsspannung einer Induktivität zugeführt wird,

bei dem die Induktivität wiederholt mittels eines getakteten Schalters durch Schließen und Öffnen desselben ge- und entladen wird und der Ladestrom über den Schalter fließt,

bei dem der Entladestrom der Induktivität über eine Diode dem Ausgang des Wandlers zugeführt wird,

bei dem einem Sensor-Messpunkt einer Steuereinheit eine Sensorspannung (Vsens) zugeführt wird,

bei dem die Steuereinheit unter Auswertung der Sensorspannung ein Schaltsignal erzeugt und dieses über ein Steuer-PIN an den Schalter ausgibt.

Die Leistungsfaktor-Korrekturschaltung kann in einem Critical Conduction (bzw. Borderline) Modus, in einem nichtstromlückenden Modus oder in einem stromlückenden Modus betrieben werden.

Ausgestaltungen der erfindungsgemäßen Lösungen sind Gegenstand der abhängigen Ansprüche. Zur Vermeidung von Wiederholungen sollen die alle Ansprüche vollinhaltlich zum Offenbarungsgehalt der Beschreibung gerechnet werden.

Ein Ausführungsbeispiel wird nachfolgend anhand der Zeichnungen beschrieben.

Es zeigen:

**Figur 1**          ein schematisiertes Schaltbild einer ersten Ausführungsform einer ersten Variante a) einer Schaltung zur Leistungsfaktor-Korrektur in einem AC/DC-Leistungswandler;

**Figur 2**          ein schematisiertes Schaltbild einer zweiten Ausführungsform der ersten Variante a) einer Schaltung zur Leistungsfaktor-Korrektur in einem AC/DC-Leistungswandler;

**Figuren 3 (a) - (e)**    Diagramme mit von der Zeit abhängigen Betriebsparametern der Schaltung gemäß den Figuren 1 und 2;

**Figur 4**          ein schematisiertes Schaltbild einer ersten Ausführungsform einer zweiten Variante b) einer Schaltung zur Leistungsfaktor-Korrektur in einem AC/DC-Leistungswandler;

**Figur 5**          ein schematisiertes Schaltbild einer zweiten Ausführungsform der zweiten Variante b) einer Schaltung zur Leistungsfaktor-Korrektur in einem AC/DC-Leistungswandler; und

**Figur 6 (a) - (e)**    Diagramme mit von der Zeit abhängigen Betriebsparametern der Schaltung gemäß den Figuren 4 und 5.

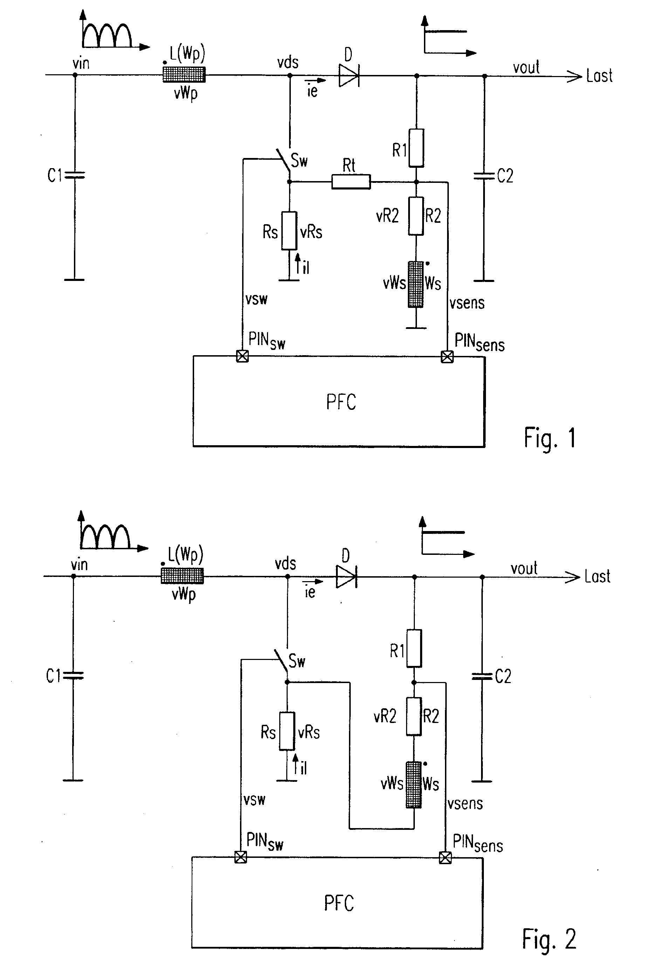

Dem Eingang der in **Figur 1** gezeigten Schaltung wird eine gleich gerichtete Netzspannung vin zugeführt, die aus positiven Sinushalbwellen besteht, wie sie durch Brückengleichrichtung der Netzspannung erzeugt werden. Obwohl die Sinushalbwellen gleiche Polarität haben, kann man vin dennoch als Wechselspannung bezeichnen. Die Wandler-Schaltung soll vin in eine Ausgangsgleichspannung vout umwandeln, die geregelt und daher weitgehend unabhängig von Schwankungen der Amplitude von vin sowie von Schwankungen der Last am Ausgang der Schaltung sein soll.

Der Eingang der Schaltung ist von einem Hochpotential-Anschluss und Masse gebildet. Der Ausgang der Schaltung ist ebenfalls von einem Hochpotential-Anschluss und Masse gebildet.

Über dem Eingang der Schaltung liegt ein Glättungskondensator C1, und über dem Ausgang der Schaltung liegt ebenfalls ein Glättungskondensator C2. In einem Längszweig der Schaltung liegt eine Induktivität L, deren ein Ende mit dem Hochpotential-Eingangsanschluss der Schaltung verbunden ist und deren anderes Ende mit einem Anschluss einer Gleichrichter-Diode D verbunden ist. Der andere Anschluss der Diode D ist mit dem Hochpotential-Ausgangsanschluss der Schaltung verbunden.

Mit dem Verbindungspunkt zwischen L und D ist ein Anschluss eines Schalters Sw verbunden, dessen anderer Anschluss über einen niederohmigen Messwiderstand Rs an Masse geführt ist.

L ist nicht nur als Induktivität wirksam, sondern bildet außerdem die Primärwicklung Wp eines Übertragers, dessen Sekundärwicklung mit Ws bezeichnet ist.

Mit dem Hochpotential-Ausgangsanschluss der Schaltung ist ein Ende eines aus zwei Widerständen R1 und R2 gebildeten Spannungsteilers verbunden. Das andere Ende des Spannungsteilers ist mit dem einen Anschluss der Sekundärwicklung Ws des Übertragers verbunden, dessen anderer Anschluss an Masse liegt.

Der Verbindungspunkt von R1 und R2 ist einerseits über einen hochohmigen Trennwiderstand Rt mit dem Verbindungspunkt zwischen Sw und Rs und andererseits mit dem Sensor-PIN PINsens einer Steuereinheit PFC verbunden. Diese weist neben dem (vorzugsweise einzigen) Sensor-Pin PINsens noch einen Steuer-PIN PINsw auf, über den die Steuereinheit PFC den Schalter mit Schaltsignalen vsw versorgt. Die der Steuereinheit PFC über den Sensor-Pin PINsens zugeführten Sensor-Signale sind mit vsens bezeichnet.

Der Steuereinheit können durchaus an demselben Pin PINsens oder an einem oder weiteren Pins noch weitere Messignale zugeführt werden.

Die Steuereinheit PFC ist in der Regel eine integrierte Schaltung, insbesondere ein ASIC oder μC ist, in der vorzugsweise die Steuerinformation für den Schalter Sw mittels eines digital implementierten Algorithmus berechnet wird. Dazu wird also das analoge Rückführsignal an dem Sensor-Pin PINsens digitalisiert.

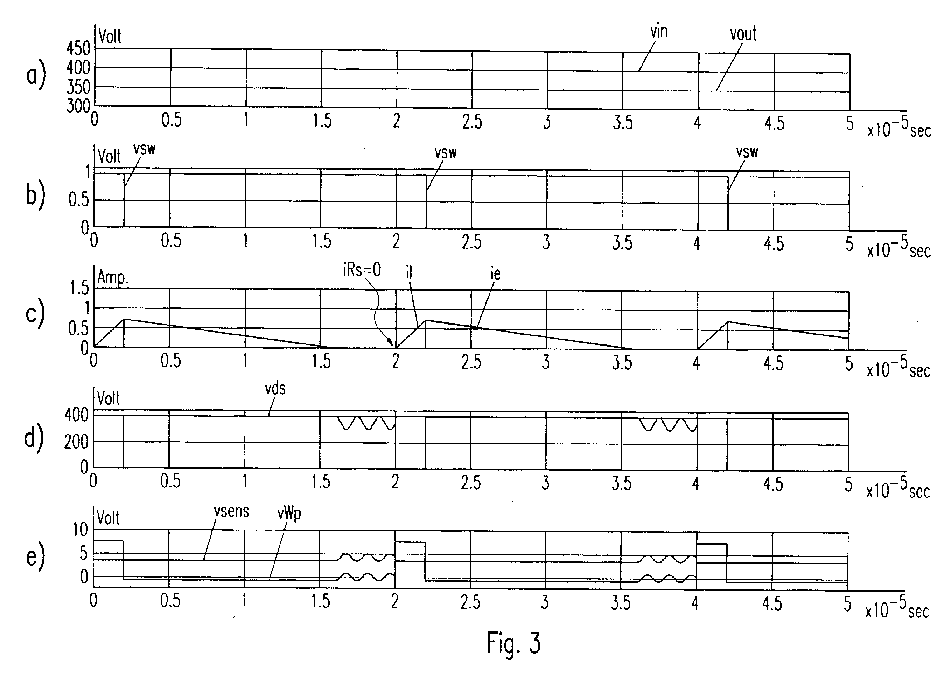

Der Schalter Sw wird von der Steuereinheit PFC mit einer Taktfrequenz getaktet, die in der Regel in einem Bereich von zehn kHz bis zu mehreren hundert kHz liegt und damit weitaus größer ist als die Folgefrequenz der Sinushalbwellen der Eingangsspannung vin. Die Änderungen von vin und erst recht von vout innerhalb einer Schaltperiode des Schalters Sw sind also vernachlässigbar gering, so dass sowohl vout als auch vin aus dieser Sicht als quasi konstant angesehen werden können. Man erkennt dies in **Figur 3(a),** in der vin und vout in Abhängigkeit von der Zeit dargestellt sind. Die Quasi-Konstanz von vin und vout erlaubt - wie später noch gezeigt wird - bei den Berechnungen der Betriebsparameter vereinfachende Betrachtungen dadurch, dass man separate Gleichungen für Wechselkomponenten mit Taktfrequenz und Gleichkomponenten mit quasi konstanter Amplitude aufzustellen.

Bei allen vier Schaltungen (**Figuren 1, 2, 4 und 5**) sind das Verhältnis R1/R2 der beiden Widerstände des Spannungsteilers und das Verhältnis Wp/Ws der Primärwicklung zur Sekundärwicklung (Ws) des Übertragers gleich, sie ergeben einen Faktor k, der kleiner 1 ist:

$$R1/R2 = Wp/Ws = k$$

Nun zur Funktion der Schaltung nach **Figur 1:**

Zu Beginn soll davon ausgegangen werden, dass der Schalter Sw am Ende einer Entladeperiode der Induktivität L geschlossen wird. Dann beginnt sich die Induktivität magnetisch aufgrund der anliegenden Eingangsspannung vin aufzuladen. Der Ladestrom il fließt über den Schalter Sw und den Messwiderstand Rs. In **Figur 3(b)** sind die Schaltimpulse vsw für den Schalter Sw dargestellt. In **Figur 3(c)** ist der Ladestrom il gezeigt. Er beginnt bei Null und steigt dann etwa linear an. Der Ladestrom il kann wie aus dem **Berechnungsblatt zu Figur 1** ersichtlich ist, berechnet durch die Steuereinheit PFC berechnet werden. Er wird mit dann in der Steuereinheit PFC einem der Einschaltzeit entsprechenden Referenzwert verglichen. Wenn der Ladestrom il den Referenzwert erreicht ist, gibt die Steuereinheit PFC ein Abschaltsignal vsw an den Schalter Sw aus, das diesen veranlasst zu öffnen.

Nun beginnt die Entladephase. Der größte Teil des Entladestromes ie fließt über die Diode D zur Last. Ein kleinerer Teil des Entladestromes ie fließt über den Spannungsteiler R1/R2, die Sekundärwicklung Ws des Übertragers und den Messwiderstand Rs nach Masse. Der Entladestrom ist ebenfalls in **Figur 3(c)** gezeigt. Man erkennt, dass er etwa linear abfällt und dann in der Entlade-Endphase dort verharrt. Tatsächlich kreuzt er die Null-Line, was aber hier nicht erkennbar ist.

Wie man der **Figur 3(d)** entnehmen kann wird die Schalterspannung vds am Verbindungspunkt zwischen der Induktivität L und der Diode D in der Entlade-Endphase wellig. Während der Entladephase ergibt sich die Schalterspannung vds aus der Summe der Durchlaßspannung der Diode D und der Ausgangsspannung vout. Die Schalterspannung vds ist damit in etwa so groß wie die Ausgangsspannung vout.

Allerdings wird vds nicht gemessen. Die Welligkeit überträgt sich jedoch auch auf die Sensor-Spannung vsens, die an PINsens zur Verfügung steht und in **Figur 3(e)** gezeigt ist. Diese Welligkeit von vsens kann die Steuereinheit PFC auswerten, um das Signal vsw an den Schalter Sw zu geben, wieder zu schließen und damit eine neue Ladephase zu beginnen. Sobald die der Induktivität L entmagnetisiert ist, ist die Entlade-Endphase und es fällt über der Induktivität L keine Spannung mehr ab. Somit liegt jetzt nicht mehr die Differenzspannung vin - vout über der Induktivität L an, wodurch auch die Spannungskomponente vWs wegfällt. Dieser Wegfall der Spannungskomponente vWs führt zu einer Spannungsänderung der Sensor-Spannung vsens, welche durch die Steuereinheit PFC erfasst werden kann.

Aufgrund dieser Spannungsänderung kann die Steuereinheit PFC das Erreichen der Entlade-Endphase erkennen, und das Signal vsw an den Schalter Sw geben, um diesen wieder zu -schließen und damit eine neue Ladephase zu beginnen.

Sofern die Leistungsfaktor-Korrekturschaltung in einem Critical Conduction (bzw. Borderline) Modus betrieben werden soll, kann die Steuerschaltung das Erreichen der Entlade-Endphase überwachen und bei Erkennen des Erreichens der Entlade-Endphase den Schalter sw wieder einschalten.

Die Leistungsfaktor-Korrekturschaltung kann aber auch in einem stromlückenden Modus betrieben werden, wobei dann die Steuerschaltung sw das Verhältnis von Einschaltzeit zu Ausschaltzeit des Schalters sw so festlegen kann, dass es immer zum Erreichen der Entlade-Endphase kommt und der Schalter sw danach noch nicht wieder gleich eingeschaltet wird. In diesem Fall kann auf die Überwachung des Erreichens der Entlade-Endphase verzichtet werden (insbesondere wenn das Verhältnis von Einschaltzeit zu Ausschaltzeit des Schalters sw so festgelegt ist, dass sich immer eine Phase ohne Stromfluß durch die Induktivität L einstellen wird).

Die Leistungsfaktor-Korrekturschaltung kann aber auch in einem nichtstromlückenden Modus betrieben werden. Das bedeutet, dass der Schalter sw jeweils noch vor Erreichen der Entlade-Endphase wieder eingeschaltet wird und somit es zu keiner Entmagnetisierung der Induktivität L am Ende einer Entladephase kommt.

Nachfolgend soll nun beschrieben werden, wie die einzelnen Betriebsparameter der Schaltung nach **Figur 1** gewonnen werden, die die Steuereinheit PFC benötigt, um die Ausgangsspannung vout durch Reglung konstant zu halten, ferner um Oberwellen-Rückstrahlung in das Netz zu minimieren, die Art oder Höhe der Netzspannung zu erkennen und schließlich um den Schalterstrom zwecks Vermeidung eines Überstromes zu überwachen.

Es sind dies die Betriebsparameter Ausgangsspannung vout, Eingangsspannung vin und Ladestrom il.

Das Grundprinzip besteht gemäß darin, dass zur Bildung der Sensorspannung vsens mindestens zwei Spannungskomponenten vR2 und vWs generiert werden, von denen die eine - hier vWs - ihrerseits aus zwei Teilspannungen bestehen. Wie man den Formeln (1) und (2) auf **dem Berechnungsbeiblatt zu Figur 1** entnehmen kann, entspricht die quasi konstante Spannungskomponente vR2 der Ausgangsspannung vout, während die getaktete Spannungskomponente vWp der Differenzspannung vin - vout entspricht. Beide Spannungskomponenten überlagern einander derart, dass gemäß Formel (6) die Ausgangsspannung bei geöffnetem Schalter Sw kompensiert wird, d. h. entfällt. Auf diese Weise enthält die Sensorspannung vsens bei geöffnetem Schalter Sw nur die mit dem bekannten Faktor k multiplizierte Eingangsspannung vin.

Bei geschlossenem Schalter Sw gewinnt man gemäß den Formeln (9)-(13) die Ausgangsspannung vout und den Ladestrom il. Zur Ermittlung der Ausgangsspannung vout und den Ladestrom il kann die bereits während der Entladephase ermittelte Eingangsspannung vin genutzt werden.

Die Messung der Sensor-Spannung vsens zur Gewinnung eines weiteren Betriebsparameters - wenn dieser die Eingangsspannung vin oder die Ausgangsspannung vout sein soll - kann im Critical Conduction (bzw. Borderline) Modus oder im stromlückenden Modus zu einem Zeitpunkt erfolgen, an dem der Ladestrom il noch Null oder nahezu Null ist. Vorteilhafterweise erfolgt diese Messung kurzzeitig nach dem Einschalten des Schalters sw.

Die Messung der Sensor-Spannung vsens zur Gewinnung eines weiteren Betriebsparameters - wenn dieser die der Ladestrom il sein soll - kann im Critical Conduction (bzw. Borderline) Modus oder im stromlückenden Modus zu einem Zeitpunkt erfolgen, an dem der Ladestrom il nicht mehr Null ist. Vorteilhafterweise erfolgt diese Messung eine gewisse Zeit nach dem Einschalten des Schalters sw. Diese Messung kann auch zu mehreren Zeitpunkten wiederholt werden.

Die Gewinnung von weiteren Betriebsparametern - wenn diese der Ladestrom il sowie die Eingangsspannung vin oder die Ausgangsspannung vout sein sollen - kann im Critical Conduction (bzw. Borderline) Modus, im nichtstromlückendem Modus oder im stromlückenden Modus durch mehrere Messungen der Sensor-Spannung vsens zu verschiedenen Zeitpunkten während der Einschaltzeit des Schalters sw (also bei geschlossenem Schalter sw) erfolgen. Durch die Auswertung dieser Messungen zu gewissen Zeitpunkten kann man durch die Bildung der Differenz der einzelnen Messwerte auf den Ladestrom il schliessen. Unter Beachtung der zeitlichen Änderung der Sensor-Spannung vsens kann somit der Ladestrom il ermittelt werden.

Anhand des in dieser Weise ermittelten Ladestroms il kann man nun auch auf die Eingangsspannung vin oder die Ausgangsspannung vout schließen, da die Sensor-Spannung vsens einen Gleichanteil (Offset) aufweist (da sich die Sensor-Spannung vsens aus dem sich nicht ändernden Anteil der Eingangsspannung vin oder der Ausgangsspannung vout und dem ansteigendem Anteil des Ladestroms il zusammensetzt).

Die Schaltung nach **Figur 2** zeigt eine zweite Ausführungsform der ersten Variante a), bei der der das eine Ende des Spannungsteilers R1/R2 mit dem Hochpotential-Ausgangsanschluss der Schaltung verbunden ist. Die Schaltung nach **Figur 2** unterscheidet sich von derjenigen nach **Figur 1** dadurch, dass die Sekundärwicklung Ws des Übertragers hier nicht direkt an Masse geführt ist, sondern indirekt über den Messwiderstand Rs. Der zeitliche Verlauf der Betriebsparameter stimmt von **Figur 2** mit demjenigen von **Figur 1 überein** und ist demnach in **Figur 3** dargestellt. Die Berechnung der Betriebsparameter der Schaltung nach **Figur 2** weicht von derjenigen nach **Figur 1** ab und ist auf dem **Berechnungsbeiblatt zu Figur 2** weitgehend selbsterklärend dargestellt.

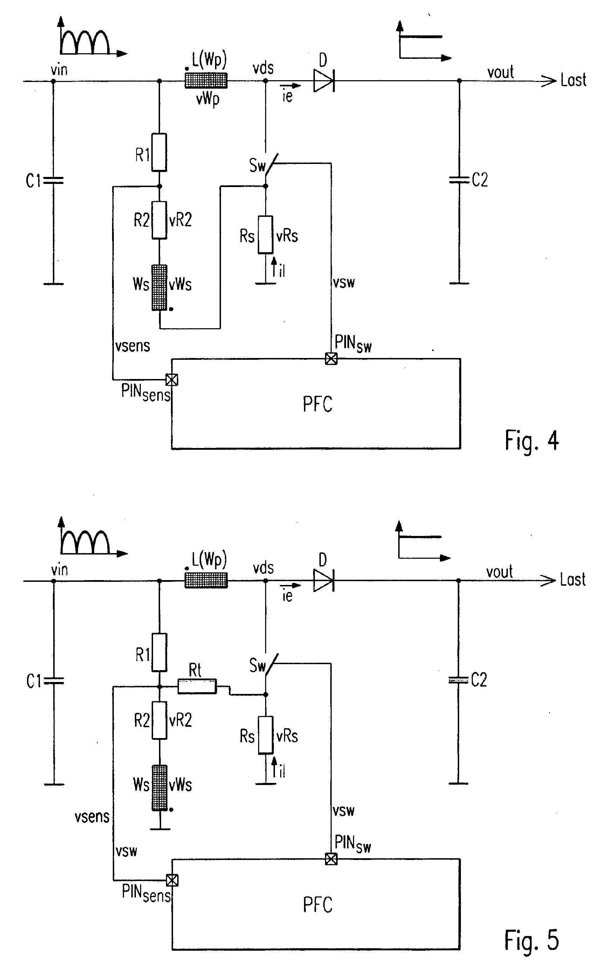

Die in den **Figuren 4 und 5** gezeigte zweite Variante b) der Schaltung unterscheidet sich von der ersten Variante a) gemäß den **Figuren 1 und 2** dadurch, dass das eine Ende des Spannungsteiler R1/R2 nicht mit dem Hochpotential-Ausgangsanschluss, sondern mit dem Hochpotential-Eingangsanschluss der Schaltung verbunden ist. Dabei stellt **Figur 4** wiederum eine erste Ausführungsform der zweiten Variante b) dar, und **Figur 5** eine zweite Ausführungsform.

Die zweite Ausführungsform gemäß **Figur 5** unterscheidet sich von der ersten Ausführungsform gemäß **Figur 4 wiederum** dadurch, dass in **Figur 4** die Sekundärwicklung Ws direkt an Masse geführt ist, in **Figur 5** dagegen indirekt über über den Messwiderstand Rs.

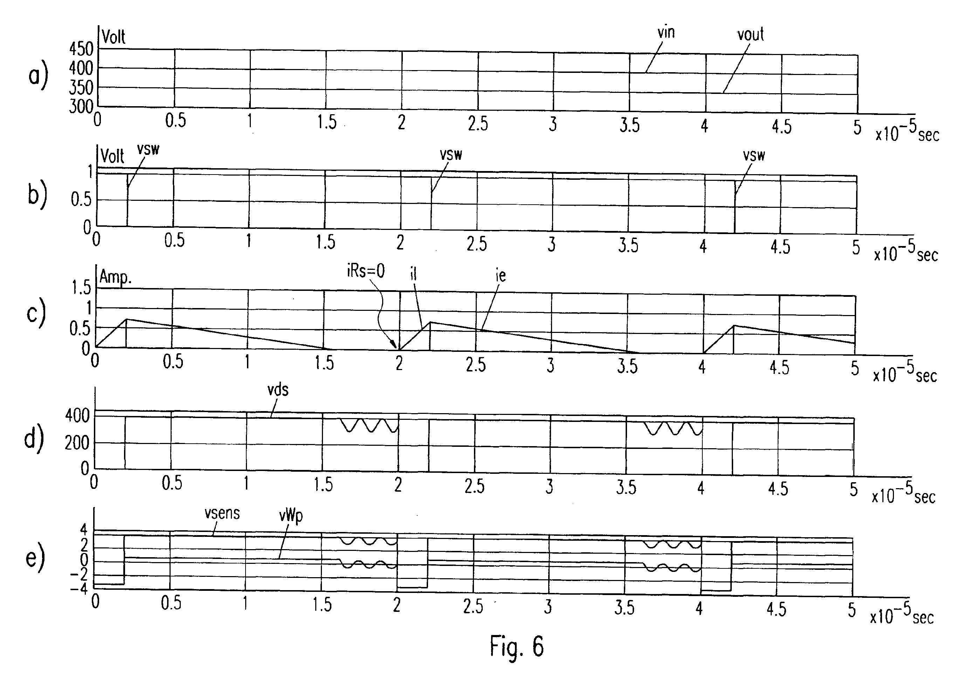

Der zeitliche Verlauf der Betriebsparameter ist für beide Schaltungen (**Figur 4 und Figur 5**) gleich und in **Figur 6** dargestellt.

Auch bei den **Figuren 4 und 5** unterscheiden sich die Berechnungen der Betriebsparameter. Sie sind deshalb separat in den **Berechnungsbeiblättern zu Figur 4 und Figur** 5 dargestellt und weitgehend selbsterklärend.

Abschließend sei noch darauf hingewiesen, dass die Messung der Ausgangsspannung vout bzw. der Eingangsspannung vin in einem Betrieb mit sehr niedriger Last oder im abgeschalteten Zustand vorteilhafterweise in einem sog. "shutdown-with-burst" Modus erfolgen sollte, d.h. in einem Betriebsmodus mit möglichst kurzer Einschaltzeit ton und möglichst langer Ausschaltzeit toff, um den EnergieTransfer möglichst gering zu halten. Dieser Betriebsmodus kann derart ausgeführt werden, dass der Schalter sw nur jeweils einmal für eine relativ kurze Zeit eingeschaltet wird und dann für eine längere Zeitdauer ausgeschalten bleibt, oder dass nur wenige Ein- und Ausschaltzyklen ("Bursts") durchlaufen werden, auf die dann eine längere Pause ("Shutdown") folgt, bevor der Schalter sw wieder eingeschaltet wird.

Eine Erweiterung der oben beschriebenen Funktionsweise der Leistungfaktor-Korrektorschaltung kann dadurch erfolgen, dass zusätzlich zur grundsätzlichen Regelschleife für die Leistungsfaktor-Korrektur die Eingangsspannung vin indirekt oder direkt ermittelt und in einer weiteren Regelschleife derart berücksichtigt wird, dass die für den Schalter Sw berechneten Einschaltzeiten verlängert werden, wenn der aktuelle Wert der Amplitude der Eingangsspannung vin auf niedrige Werte absinkt, also unter einen vorgegebene Schwellenwert. Die Bestimmung der Eingangsspannung vin kann beispielsweise wie oben beschrieben über die Auswertung der Sensorspannung Vsw erfolgen. Insbesondere kann dazu die Spannung an der Sekundärwicklung des Übertragers Ws ausgewertet werden.

Dabei kann die Verlängerung der Einschaltzeiten des Schalters Sw bei niedriger Eingangsspannnungsamplitude beispielsweise anhand einer Tabelle oder über eine Berechnung oder einfach über eine einfache (konstante) Verlängerung ab dem Unterschreiten eines bestimmten Spannungswerts erfolgen. Hierdurch wird der bei einem Hochsetzsteller normalerweise auftretende Effekt berücksichtigt, dass der Strom durch die Induktivität L kurz vor einem Nulldurchgang der Eingangsspannung vin sprunghaft auf Null fällt und nach dem Nulldurchgang erst mit einem gewissen Abstand wieder einsetzt. Dies ist unter anderem auf die der Leistungfaktor-Korrektorschaltung vorgeschaltete Filterschaltung zurückzuführen, da deren Elemente immer umgeladen werden müssen. In diesem Zeitraum sind Strom und Spannung nicht in Phase, was zu Oberwellen führt, die als Störungen ins Netz zurückstrahlen können. Durch die Verlängerung der Einschaltzeiten kann dieser Effekt allerdings unterdrückt werden, so dass die Betriebseigenschaften des Betriebsgeräts nochmals verbessert werden. Dies stellt allerdings lediglich eine Ergänzung der zuvor beschriebenen Regelung dar und ist nicht zwingend erforderlich.


**Liste der Bezugszeichen**


| vin | = Eingangsspannung |
| --- | --- |
| C1, C2 | = Kondensatoren |
| L | = Induktivität |
| Wp | = Primärwicklung des Übertragers |
| vWP | = Spannung über Primärwicklung (Induktivität) |
| vds | = Schalterspannung |
| sw | = Schalter |

D              = Diode

PFC          = Steuereinheit (power factor correction controller)

$PIN_{sw}$      = Steuer-PIN

$PIN_{sens}$     = Sensor-PIN

vsw         = Schaltspannung

Rs           = Messwiderstand

vRs         = Spannung über Messwiderstand Rs

il             = Ladestrom

ie            = Entladestrom

R1, R2     = Widerstände des Spannungsteilers

vR2         = Spannung über Widerstand R2

Ws         = Sekundärwicklung des Übertragers

vWs        = Spannung über der Sekundärwicklung Ws

vsens       = Sensor-Spannung

vout        = Ausgangsspannung

Rt           = Trennwiderstand

**Berechnungsbeiblatt zu Fig. 1**

$$R1/ R2 = Wp/ Ws = k$$

<u>Schalter Sw = offen</u>

| | | | | |
|---|---|---|---|---|
| (Hinweis 1) | $\rightarrow$ | vR2 = K*vout | (1) |
| (Hinweis 2) | $\rightarrow$ | vWp = vin-vout | (2) |
| | | vWs = k*vWp | (3) |
| (2)+(3) | $\rightarrow$ | vWs = k*(vin-vout) | (4) |
| | | vsens = vR2+vWp | (5) |
| (1)+(2) | $\rightarrow$ | vsens = k*vout+k* (vin-vout) | (6) |
| | | Vsens = k*vin | (7) |
| Aus (7) gewinnt man **vin,** da k bekannt ist. | | | (8) |

<u>Schalter Sw = geschlossen</u>

| | | | |
|---|---|---|---|
| | | vWp = vin+vRs | (9) |
| | | vWs = k*vin+k*vRs | (10) |
| | | vsens = vR2+vWs | (11) |
| (9)+(1) | $\rightarrow$ | vsens = k*vout+vWs | (12) |
| | | Vens = k*out+k*vin+K*vRs | (13) |
| (Hinweis 3) | $\rightarrow$ | vsens = k*vout+k*vin | |

Aus (13) gewinnt man **vout,** da k und vin nach (8) bekannt sind.

Aus (13) gewinnt man auch **vRs** und damit **il** zu einem Zeitpunkt, wenn vRs ansteigt.

Hinweis 1:     betrifft eine quasi konstante Komponente

Hinweis 2:     betrifft eine getaktete Komponente

(fortgesetzt)

| Hinweis 3: | vRs ist zu Beginn einer Ladephase Null. Wenn vsens dann gemessen wird, entfällt Anteil von vRs. |

**Berechnungsbeiblatt zu Fig. 2**

$$R1/\ R2\ =\ Wp/\ Ws\ =\ k$$

Schalter Sw = offen

| (Hinweis) | $\rightarrow$ | $vRs = k*vout$ (Gleichspann.-Komp) | (1) |
| (Hinweis) | $\rightarrow$ | $vWp = vin-vout$ | (2) |
| | | $vWs = k*vWp$ | (3) |
| (2)+(3) | $\rightarrow$ | $vWs = k*(vin-vout)$ | (4) |
| (Hinweis 4) | $\rightarrow$ | $vsens = vR2+vWp$ | (5) |
| (1)+(2) | $\rightarrow$ | $vsens = k*vout+k*(vin-vout)$ | (6) |
| | | $Vsens = k*vin$ | (7) |
| | | Aus (7) gewinnt man **vin,** da k bekannt ist. | (8) |

Schalter Sw = geschlossen

| | | $vWp = vin+vRs$ | (9) |
| | | $vWs = k*vin+k*vRs$ | (10a) |
| | | $vsens = vR2+vWs+k*vRs$ | (11a) |
| (11a)+(1) | $\rightarrow$ | $vsens = k*vout+vWs+k*vRs$ | (12) |
| (Hinweis 3) | $\rightarrow$ | $vsens = k*vout+k*vin+(1+k)*vRs$ | (13) |

Aus (13) gewinnt man **vout,** da k und vin bekannt sind.

Aus (13) gewinnt man auch **vRs** und damit **il** zu einem Zeitpunkt, wenn vRs ansteigt.

| (Hinweis 4) | $\rightarrow$ | Da Rt sehr groß und Rs sehr klein ist, ist deren Beitrag zu vsens vernachlässigbar. |

**Berechnungsbeiblatt zu Fig. 4**

$$R1/\ R2\ =\ Wp/\ Ws\ =\ k$$

| (Hinweis 1) | | $\rightarrow vR2 = k*vin$ | (20) |
| (Hinweis 2) | | $\rightarrow vWp = vin-vout$ | (21) |
| | | $vWs = -k*vWp$ | (22) |
| (21)+(22) | | $\rightarrow vWs = -k*(vin-vout)$ | (23) |
| | | $Vsens = vR2+vWs+vRs$ | (24) |
| (24)+(20)+(23) + vRs | | $\rightarrow vsens = k*vin-k*(vin-vout)$ | (25) |

(fortgesetzt)

| | | |
|---|---|---|
| (Hinweis 5) | $\rightarrow$ vens = k*vout | (26) |
| | Aus (26) gewinnt man **vout,** da k bekannt ist. | (27) |

<u>Schalter Sw = geschlossen</u>

| | | |
|---|---|---|
| | vWp = vin+vRs | (28) |
| | vWs = -k*vin-k*vRs | (29) |
| | vsens = vR2+vWs+vRs | (30) |
| (30)+(20) $\rightarrow$ | vsens = k*vin+vWs+vRs | (31) |
| (31)+(29) $\rightarrow$ | vsens = k*vin-k*vin+(1-k)*vRs | (32) |
| | Vsens = (1-k)*vRs | (33) |
| | Aus (33) gewinnt man **vRs** und damit **il,** da k bekannt ist. | |

<u>Hinweis 5</u>: Da Rs sehr klein ist, ist auch vRs bei geöffnetem Schalter Sw sehr klein und vRs vernachlässigbar.

**Berechnungsblatt zu Fig. 5**

$$R1/ \ R2 \ = \ Wp/ \ Ws \ = \ k$$

<u>Schalter Sw = offen</u>

| | | |
|---|---|---|
| (Hinweis 1) $\rightarrow$ | vRs = k*vin | (20) |
| (Hinweis 2) $\rightarrow$ | vWp = vin-vout | (21) |
| | vWs = -k*vWp | (22) |
| (21)+(22) $\rightarrow$ | vWs = -k*(vin-vout) | (23) |
| (Hinweis 4) $\rightarrow$ | vsens = vRs+vWs | (24a) |
| (24)+(20)+(23) $\rightarrow$ | vsens = k*vin-k*(vin-vout) | (25a) |
| | vens = k*vout | (26) |
| | Aus (26) gewinnt man **vout,** da k bekannt ist. | (27) |

<u>Schalter Sw = geschlossen</u>

| | | |
|---|---|---|
| | vWp = vin+vRs | (28) |
| | vWs = -k*vin-k*vRs | (29) |
| | vsens = vRs+vWs | (30a) |
| (30a)+(20) $\rightarrow$ | vsens = k*vin+vWs | (31a) |
| (31a)+(29) $\rightarrow$ | vsens = k*vin-k*vin-k*vRs | (32a) |
| | Vsens = k*vRs | (33a) |
| | Aus (33a) gewinnt man **vRS** Und damit **il,** da k bekannt ist. | |

**Patentansprüche**

1. Verfahren zur aktiven Leistungsfaktorkorrektur,
bei dem eine vorzugsweise aus gleichgerichteten Netzhalbwellen bestehende Eingangsspannung (vin) einer Induktivität (L) zugeführt wird,
bei dem die Induktivität (L) wiederholt mittels eines durch eine Steuereinheit (PFC) getakteten Schalters (Sw) durch Schließen und Öffnen desselben ge- und entladen wird und der Ladestrom (il) über den Schalter (Sw) fließt,
bei dem der Entladestrom (ie) der Induktivität (L) über eine Diode (D) dem Ausgang des Wandlers zugeführt wird,
bei dem der Steuereinheit (PFC) eine Sensor-Spannung (vsens) zugeführt wird,
bei dem die Steuereinheit (PFC) unter Auswertung der Sensor-Spannung (vsens) ein Schaltsignal (vsw) für den Schalter (Sw) erzeugt,
**gekennzeichnet dadurch, dass**
die Sensorspannung (vsens) bei geöffnetem Schalter (Sw) aus mindestens zwei Spannungskomponenten (vR2, vWs) besteht, von denen die erste (vR2)

    a) der Ausgangsspannung (vout), oder
    b) der Eingangsspannung (vin)
entspricht, und von denen die zweite (vWs) einer aus der Eingangsspannung (vin) und Ausgangsspannung (vout) gebildeten Differenzspannung entspricht, und
bei dem die beiden Spannungskomponenten (vR2, vWs) bei geöffnetem Schalter (Sw) derart überlagert werden, dass die eine der beiden die Differenzspannung bildenden Spannungen (vin, vout) kompensiert wird, so dass nur noch die andere zur Bildung der Sensor-Spannung (vsens) zur Verfügung steht und durch die Steuereinheit (PFC) als Betriebsparameter (vout, vin) ausgewertet wird.

2. Verfahren nach Anspruch 1,
bei dem anschließend bei geschlossenem Schalter (Sw) unter Auswertung des zuvor ermittelten Betriebsparameters (vout, vin) ein weiterer Betriebsparameter (vin, vout, il) gewonnen wird.

3. Verfahren nach Anspruch 1 oder 2,
bei dem Sensorspannung (vsens) bei geschlossenem Schalter (Sw) eine dritte Spannungskomponente (vRS) aufweist, die dem Ladestrom (il) entspricht.

4. Verfahren nach Anspruch 3,
bei dem die Messung der Sensorspannung (vsens) zur Gewinnung eines weiteren Betriebsparameters - wenn dieser die Eingangsspannung (vin) oder die Ausgangsspannung (vout) sein soll - im Critical Conduction (bzw. Borderline) Modus oder im stromlückenden Modus zu einem Zeitpunkt erfolgt, an dem der Ladestrom (il) noch Null oder nahezu Null ist.

5. Verfahren nach Anspruch 3,
bei dem die Messung der Sensorspannung (vsens) zur Gewinnung eines weiteren Betriebsparameters - wenn dieser die der Ladestrom (il) sein soll - im Critical Conduction (bzw. Borderline) Modus, im nichtstromlückenden Modus oder im stromlückenden Modus zu einem Zeitpunkt erfolgt, an dem der Ladestrom (il) nicht mehr Null ist.

6. Verfahren nach einem der vorhergehenden Ansprüche,
bei der die Steuereinheit (PFC) die Einschaltzeit des getakteten Schalters (Sw) adaptiv oder um einen konstanten Wert verlängert, wenn die die direkt oder indirekt erfasste Amplitude der Eingangsspannung unterhalb eines festen oder veränderbaren Schwellenwerts liegt.

7. Leistungsfaktor-Korrekturschaltung, umfassend eine Induktivität (L), einen getakteten Schalter (Sw), eine Diode (D), eine Steuereinheit (PFC) und einen Spannungsteiler mit zwei Widerständen (R1, R2),
bei der eine vorzugsweise aus gleichgerichteten Netzhalbwellen bestehende Eingangsspannung (vin) der Induktivität (L) zugeführt ist,
bei der die Induktivität (L) dazu eingerichtet ist, wiederholt mittels des getakteten Schalters (Sw) durch Schließen und Öffnen desselben ge- und entladen zu werden und der Ladestrom (il) über den Schalter (Sw) zugeführt ist,
bei der der Entladestrom (ie) der Induktivität (L) über die Diode (D) dem Ausgang der Schaltung zugeführt ist,
bei der einem Sensor-Messeingang (Pinsens) der Steuereinheit (PFC) eine Sensorspannung (vsens) zugeführt ist,
**dadurch gekennzeichnet, dass**
die Steuereinheit (PFC) dazu eingerichtet ist, unter Auswertung der Sensorspannung (vsens) ein Schaltsignal (vsw) zu erzeugen und dieses über einen Steuer-Pin (PINsw) an den Schalter (Sw) auszugeben,
wobei der Spannungsteiler mit einer Sekundärwicklung (Ws) eines Übertragers in Serie geschaltet ist, dessen Primärwicklung (Wp) von der Induktivität (L) gebildet ist, wobei ein Verbindungspunkt zwischen den beiden Widerständen (R1, R2) des Spannungsteilers mit dem Sensor-Messeingang (PINsens) zur Messung der Eingangsspannung (vin) oder der Ausgangsspannung (vout) des Wandlers verbunden ist, wobei die Diode (D) in Serie mit der Induktivität (L), der Spannungsteiler mit seiner potential höheren Seite mit der Serienschaltung aus der Induktivität (L) und der Diode (D), und der Schalter (Sw) an einem Mittenpunkt zwischen der Induktivität (L) und der Diode (D) verbunden ist.

8. Schaltung nach Anspruch 7,
bei der die Serienschaltung aus dem Spannungsteiler (R1, R2) und der Sekundärwicklung (Ws) des Übertragers einerseits mit dem Hochpotential-Anschluss

    a) des Ausgangs oder
    b) des Eingangs
des Wandlers und andererseits direkt oder indirekt mit Masse verbunden ist, und
bei der der Verbindungspunkt zwischen den beiden Widerständen (R1, R2) des Spannungsteilers mit dem Sensor-Messeingang (PINsens) verbunden ist.

9. Leistungsfaktor-Korrekturschaltung nach Anspruch 7 oder 8,
bei der der Schalter (Sw) einerseits mit dem Verbindungspunkt zwischen der Induktivität (L) und der Diode (D) und andererseits über einen Messwiderstand (Rs) mit Masse verbunden ist.

10. Leistungsfaktor-Korrekturschaltung nach Anspruch 7, 8 oder 9,
bei der die Serienschaltung aus dem Spannungsteiler (R1, R2) und der Sekundärwicklung (Ws) des Übertragers über den Messwiderstand (Rs) indirekt mit Masse verbunden ist.

11. Leistungsfaktor-Korrekturschaltung nach Anspruch 7, 8 oder 9,
bei der - wenn die Serienschaltung aus dem Spannungsteiler (R1, R2) und der Sekundärwicklung (Ws) des Übertragers direkt mit Masse verbunden ist - der Verbindungspunkt der beiden Widerstände (R1, R2) des Spannungsteilers außerdem über einen hochohmigen Trennwiderstand (Rt) mit dem Verbindungspunkt zwischen dem Schalter (Sw) und dem Shunt (Rs) verbunden ist.

12. Leistungsfaktor-Korrekturschaltung nach einem der Ansprüche 7 bis 11,
bei dem das Verhältnis der beiden Widerstände (R1, R2) des Spannungsteilers und das Verhältnis der Primärwicklung (Wp) zur Sekundärwicklung (Ws) des Übertragers gleich oder kleiner 1 sind.

13. Leistungsfaktor-Korrekturschaltung nach einem der Ansprüche 7 bis 12,
bei der die Steuereinheit eine integrierte Schaltung, insbesondere ein ASIC oder μC ist, in der vorzugsweise die Steuerinformation für den Schalter mittels eines digital implementierten Algorithmus berechnet wird.

14. Leistungsfaktor-Korrekturschaltung nach einem der Ansprüche 7 bis 13,
bei der die Steuereinheit (PFC) die Einschaltzeit des getakteten Schalters (Sw) adaptiv oder um einen konstanten Wert verlängert, wenn die die direkt oder indirekt erfasste Amplitude der Eingangsspannung unterhalb eines festen oder veränderbaren Schwellenwerts liegt.

15. Betriebsgerät für Leuchtmittel, insbesondere LEDs, OLEDs oder Gasentladungslampen,
aufweisend eine Schaltung nach einem der Ansprüche 7 bis 14.

16. Leuchte,
aufweisend ein Betriebsgerät nach Anspruch 15 und wenigstens ein angeschlossenes Leuchtmittel, insbesondere eine oder mehrere LEDs, OLEDs oder Gasentladungslampen.

**Claims**

1. Method for active power factor correction,
in which an input voltage (vin) preferably consisting of rectified system half-cycles is supplied to an inductance (L),

in which the inductance (L) is repeatedly charged and discharged by means of a switch (Sw) clocked by a control unit (PFC) by virtue of said switch closing and opening, and the charge current (il) flows via the switch (Sw),

in which the discharge current (ie) of the inductance (L) is supplied to the output of the converter via a diode (D),

in which a sensor voltage (vsens) is supplied to the control unit (PFC),

in which the control unit (PFC), by evaluating the sensor voltage (vsens), generates a switching signal (vsw) for the switch (Sw),

**characterized in that**

the sensor voltage (vsens) when the switch (Sw) is open consists of at least two voltage components (vR2, vWs), of which the first (vR2) corresponds

a) to the output voltage (vout), or

b) to the input voltage (vin),

and of which the second (vWs) corresponds to a differential voltage formed from the input voltage (vin) and output voltage (vout), and

in which the two voltage components (vR2, vWs) when the switch (Sw) is open are superimposed in such a way that one of the two voltages (vin, vout) forming the differential voltage is compensated for, with the result that now only the other voltage is available for forming the sensor voltage (vsens) and is evaluated by the control unit (PFC) as operational parameter (vout, vin).

2. Method according to Claim 1,
in which, then, when the switch (Sw) is closed, by evaluating the previously determined operational parameter (vout, vin), a further operational parameter (vin, vout, il) is obtained.

3. Method according to Claim 1 or 2,
in which sensor voltage (vsens) when the switch (Sw) is closed has a third voltage component (vRs), which corresponds to the charge current (il).

4. Method according to Claim 3,
in which the measurement of the sensor voltage (vsens) for obtaining a further operational parameter, if said operational parameter is intended to be the input voltage (vin) or the output voltage (vout), is performed in the critical conduction (or borderline) mode or in the discontinuous mode at a time at which the charge current (il) is still zero or is virtually zero.

5. Method according to Claim 3,
in which the measurement of the sensor voltage (vsens) for obtaining a further operational parameter, if said operational parameter is intended to be the charge current (il), is performed in the critical conduction (or borderline) mode, in the continuous mode or in the discontinuous mode at a time at which the charge current (il) is no longer zero.

6. Method according to one of the preceding claims,
in which the control unit (PFC) extends the switch-on time of the clocked switch (Sw) adaptively or by a constant value when the directly or indirectly detected amplitude of the input voltage is below a fixed or variable threshold value.

7. Power factor correction circuit, comprising an inductance (L), a clocked switch (Sw), a diode (D), a control unit (PFC), and a voltage divider comprising two resistors (R1, R2),
in which an input voltage (vin) preferably consisting of rectified system half-cycles is supplied to the inductance (L),
in which the inductance (L) is designed to be charged and discharged repeatedly by means of the clocked switch (Sw) by virtue of said switch closing and opening, and the charge current (il) is supplied via the switch (Sw),
in which the discharge current (ie) of the inductance (L) is supplied to the output of the circuit via the diode (D),
in which a sensor voltage (vsens) is supplied to a sensor measurement input (Pinsens) of the control unit (PFC),
**characterized in that**
the control unit (PFC) is designed to generate a switching signal (vsw) by evaluating the sensor voltage (vsens) and to output said switching signal to the switch (Sw) via a control pin (PINsw),
wherein the voltage divider is connected in series with a secondary winding (Ws) of a transformer, whose primary winding (Wp) is formed by the inductance (L),
wherein a node between the two resistors (R1, R2) of the voltage divider is connected to the sensor measurement input (PINsens) for measuring the input voltage (vin) or the output voltage (vout) of the converter, wherein the diode (D) is connected in series with the inductance (L), the voltage divider is connected with its higher-potential side to the series circuit comprising the inductance (L) and the diode (D), and the switch (Sw) is connected at a centre point between the inductance (L) and the diode (D).

8. Circuit according to Claim 7,
in which the series circuit comprising the voltage divider (R1, R2) and the secondary winding (Ws) of the transformer is connected on one side to the high-potential connection

    a) of the output or
    b) of the input
    of the converter and on the other side directly or indirectly to the ground, and
    in which the node between the two resistors (R1, R2) of the voltage divider is connected to the sensor measurement input (PINsens).

9. Power factor correction circuit according to Claim 7 or 8,
in which the switch (Sw) is connected on one side to the node between the inductance (L) and the diode (D) and on the other side to ground via a shunt (Rs).

10. Power factor correction circuit according to Claim 7, 8 or 9,
in which the series circuit comprising the voltage divider (R1, R2) and the secondary winding (Ws) of the transformer is connected indirectly to ground via the shunt (Rs).

11. Power factor correction circuit according to Claim 7, 8 or 9,
in which, when the series circuit comprising the voltage divider (R1, R2) and the secondary winding (Ws) of the transformer is connected directly to ground, the node between the two resistors (R1, R2) of the voltage divider is also connected to the node between the switch (Sw) and the shunt (Rs) via an isolating resistor (Rt) with a high resistance value.

12. Power factor correction circuit according to one of Claims 7 to 11,
in which the ratio of the two resistors (R1, R2) of the voltage divider and the ratio of the primary winding (Wp) to the secondary winding (Ws) of the transformer are equal to or less than 1.

13. Power factor correction circuit according to one of Claims 7 to 12,
in which the control unit is an integrated circuit, in particular an ASIC or $\mu$C, in which preferably the control information for the switch is calculated by means of a digitally implemented algorithm.

14. Power factor correction circuit according to one of Claims 7 to 13,
in which the control unit (PFC) extends the switch-on time of the clocked switch (Sw) adaptively or by a constant value when the directly or indirectly detected amplitude of the input voltage is below a fixed or variable threshold value.

15. Operating device for light-emitting means, in particular LEDs, OLEDs or gas discharge lamps,
having a circuit according to one of Claims 7 to 14.

16. Luminaire,
having an operating device according to Claim 15 and at least one connected light-emitting means, in particular one or more LEDs, OLEDs or gas discharge lamps.

**Revendications**

1. Procédé de correction active de facteur de puissance,
dans lequel une tension d'entrée (vin) composée de préférence de demi-ondes de réseau redressées est fournie à une inductance (L),
dans lequel l'inductance (L) est chargée et déchargée de manière répétée au moyen d'un commutateur (Sw), qui est cadencé par une unité de commande (PFC), par l'ouverture et la fermeture de celui-ci, et le courant de charge (il) circule via le commutateur (Sw),
dans lequel le courant de décharge (ie) de l'inductance (L) est fourni par l'intermédiaire d'une diode (D) à la sortie du convertisseur,
dans lequel une tension de capteur (vsens) est fournie à l'unité de commande (PFC), dans lequel l'unité de commande (PFC) génère un signal de commutation (vsw) pour le commutateur (Sw) en évaluant la tension de capteur (vsens),

**caractérisé en ce que**
la tension de capteur (vsens) consiste, en cas de commutateur ouvert (Sw), en au moins deux composantes de tension (vR2, vWs), dont la première (vR2) correspond à

    a) la tension de sortie (vout), ou
    b) la tension d'entrée (vin),
    et dont la deuxième (vWs) correspond à une tension de différence formée à partir de la tension d'entrée (vin) et de la tension de sortie (vout), et
    dans lequel, en cas de commutateur (Sw) ouvert, les deux composantes de tension (vR2, vWs) sont superposées de telle sorte que l'une des deux tensions (vin, vout) formant la tension de différence est compensée, de sorte que seule l'autre est mise à disposition pour former la tension de capteur (vsens) et est évaluée par l'unité de commande (PFC) comme paramètre de fonctionnement (vout, vin).

2. Procédé selon la revendication 1,
dans lequel, ensuite, en cas de commutateur (Sw) fermé, un autre paramètre de fonctionnement (vin, vout, il) est obtenu en évaluant le paramètre de fonctionnement déterminé précédemment (vout, vin).

3. Procédé selon la revendication 1 ou 2,
dans lequel la tension de capteur (vsens) présente, en cas de commutateur (Sw) fermé, une troisième composante de tension (vRS), qui correspond au courant de charge (il).

4. Procédé selon la revendication 3,
dans lequel la mesure de la tension de capteur (vsens) est effectuée pour l'obtention d'un autre paramètre de fonctionnement - lorsque celui-ci est destiné à être la tension d'entrée (vin) ou la tension de sortie (vout) - dans le mode de conduction critique (ou borderline) ou dans le mode discontinu à un instant où le courant de charge (il) est encore nul ou presque nul.

5. Procédé selon la revendication 3,
dans lequel la mesure de la tension de capteur (vsens) est effectuée pour l'obtention d'un autre paramètre de fonctionnement - lorsque celui-ci est destiné à être le courant de charge (il) - dans le mode de conduction critique (ou borderline), dans le mode non discontinu ou dans le mode discontinu à un instant où le courant de charge (il) n'est plus nul.

6. Procédé selon l'une des revendications précédentes,
dans lequel l'unité de commande (PFC) prolonge le temps de mise en circuit du commutateur cadencé (Sw) de manière adaptative ou d'une valeur constante, lorsque l'amplitude, détectée de manière directe ou indirecte, de la tension d'entrée se trouve sous une valeur de seuil fixe ou modifiable.

7. Circuit de correction de facteur de puissance, comprenant une inductance (L), un commutateur cadencé (Sw), une diode (D), une unité de commande (PFC) et un diviseur de tension avec deux résistances (R1, R2),
dans lequel une tension d'entrée (vin) composée de préférence de demi-ondes de réseau redressées est fournie à l'inductance (L),
dans lequel l'inductance (L) est conçue pour être chargée et déchargée de manière répétée au moyen du commutateur cadencé (Sw) par fermeture et ouverture de celui-ci, et le courant de charge (il) est fourni par l'intermédiaire du commutateur (Sw), dans lequel le courant de décharge (ie) de l'inductance (L) est fourni par l'intermédiaire de la diode (D) à la sortie du circuit,
dans lequel une tension de capteur (vsens) est fournie à une entrée de mesure de capteur (Pinsens) de l'unité de commande (PFC),
**caractérisé en ce que**
l'unité de commande (PFC) est conçue pour générer un signal de commutation (vsw) en évaluant la tension de capteur (vsens) et pour délivrer celui-ci au commutateur (Sw) par l'intermédiaire d'une broche de commande (PINsw),
dans lequel le diviseur de tension est monté en série avec un enroulement secondaire (Ws) d'un transmetteur, dont l'enroulement primaire (Wp) est formé par l'inductance (L),
dans lequel un point de jonction entre les deux résistances (R1, R2) du diviseur de tension est relié à l'entrée de mesure de capteur (PINsens) pour la mesure de la tension d'entrée (vin) ou de la tension de sortie (vout) du convertisseur, dans lequel la diode (D) est montée en série avec l'inductance (L), le diviseur de tension est relié par son côté de potentiel haut au circuit série composé de l'inductance (L) et de la diode (D), et le commutateur (Sw) est relié à un point central entre l'inductance (L) et la diode (D).

**8.** Circuit selon la revendication 7,
dans lequel le circuit série composé du diviseur de tension (R1, R2) et de l'enroulement secondaire (Ws) du transmetteur est relié d'une part à la borne de potentiel haut

a) de la sortie ou
b) de l'entrée
du convertisseur et d'autre part à la masse de manière directe ou indirecte, et
dans lequel le point de jonction entre les deux résistances (R1, R2) du diviseur de tension est relié à l'entrée de mesure de capteur (PINsens).

**9.** Circuit de correction de facteur de puissance selon la revendication 7 ou 8,
dans lequel le commutateur (Sw) est relié d'une part au point de jonction entre l'inductance (L) et la diode (D) et d'autre part à la masse par l'intermédiaire d'une résistance de mesure (Rs).

**10.** Circuit de correction de facteur de puissance selon la revendication 7, 8 ou 9,
dans lequel le circuit série composé du diviseur de tension (R1, R2) et de l'enroulement secondaire (Ws) du transmetteur est relié de manière indirecte à la masse par l'intermédiaire de la résistance de mesure (Rs).

**11.** Circuit de correction de facteur de puissance selon la revendication 7, 8 ou 9,
dans lequel - lorsque le circuit série composé du diviseur de tension (R1, R2) et de l'enroulement secondaire (Ws) du transmetteur est relié directement à la masse - le point de jonction des deux résistances (R1, R2) du diviseur de tension est relié en outre par l'intermédiaire d'une résistance de séparation à haute impédance (Rt) au point de jonction entre le commutateur (Sw) et le shunt (Rs).

**12.** Circuit de correction de facteur de puissance selon l'une des revendications 7 à 11,
dans lequel le rapport des deux résistances (R1, R2) du diviseur de tension et le rapport de l'enroulement primaire (Wp) sur l'enroulement secondaire (Ws) du transmetteur sont égaux ou inférieurs à 1.

**13.** Circuit de correction de facteur de puissance selon l'une des revendications 7 à 12,
dans lequel l'unité de commande est un circuit intégré, en particulier un ASIC ou un microcontrôleur, dans lequel de préférence l'information de commande pour le commutateur est calculée au moyen d'un algorithme mis en oeuvre numériquement.

**14.** Circuit de correction de facteur de puissance selon l'une des revendications 7 à 13,
dans lequel l'unité de commande (PFC) prolonge le temps de mise en circuit du commutateur cadencé (Sw) de manière adaptative ou d'une valeur constante, lorsque l'amplitude, détectée de manière directe ou indirecte, de la tension d'entrée se trouve en-dessous d'une valeur de seuil fixe ou modifiable.

**15.** Appareil de commande pour moyens d'éclairage, en particulier LEDs, OLEDs ou lampes à décharge de gaz,
présentant un circuit selon l'une des revendications 7 à 14.

**16.** Luminaire,
présentant un appareil de commande selon la revendication 15 et au moins un moyen d'éclairage raccordé, en particulier une ou plusieurs LEDs, OLEDs ou lampes à décharge de gaz.

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007121944 A
- DE 10128588 A1
- DE 102004025597 A1